# EUROPEAN PATENT SPECIFICATION

(11) **EP 4 095 187 B1**
(45) Date of publication and mention of the grant of the patent: **19.08.2026**
(21) Application number: 22172231.7
(22) Date of filing: 09.05.2022
(51) Int. Cl.: C08K 3/08, C08L 83/04

(54) **THERMALLY CONDUCTIVE SILICONE COMPOSITION AND CURED PRODUCT THEREOF**
WÄRMELEITFÄHIGE SILIKONZUSAMMENSETZUNG UND GEHÄRTETES PRODUKT DARAUS
COMPOSITION DE SILICONE THERMOCONDUCTRICE ET SON PRODUIT DURCI

(30) Priority: 25.05.2021 JP 2021087326
(43) Date of publication of application: 30.11.2022
(73) Proprietor: SHIN-ETSU CHEMICAL CO., LTD., Tokyo 1000005 (JP)
(72) Inventor: MARUYAMA, Narimi, Gunma, 379-0224 (JP); YAMADA, Kunihiro, Gunma, 379-0224 (JP)
(74) Representative: Angerhausen, Christoph

(56) References cited:
- EP-B1- 0 892 630
- JP-B2- 5 640 945

## Description

### BACKGROUND OF THE INVENTION

### Field of the invention

The present invention relates to a thermally conductive silicone composition and a cured product thereof.

### Background art

Heat generating electronic parts mounted on printed-wiring circuit boards, e.g. IC packages such as CPUs, may exhibit an impaired performance and breakages due to a temperature rise resulting from a heat generation at the time of use. Thus, conventionally, a thermally conductive sheet with a favorable thermal conductivity or a thermally conductive grease is often interposed or applied between such IC package and a heat dissipation fin-equipped heat dissipation member so that the heat generated from the IC package or the like can be efficiently transmitted to the heat dissipation member and then released therefrom. However, as electronic parts or the like are gaining higher performances, the amount of heat generated thereby tends to increase more than ever; it is demanded that there be developed a material and/or member superior to the conventional ones in thermal conductivity.

A conventional thermally conductive sheet has a work process merit of being able to be readily mounted and installed. Further, the merit of a thermally conductive grease is such that it will conform with the convexities and concavities on the surfaces of a CPU and a heat dissipation member etc. without being affected by such convexities and concavities so that the CPU and the heat dissipation member can be brought into a close contact with each other without leaving a gap between the two, thereby yielding a small interfacial thermal resistance. However, a thermally conductive sheet and a thermally conductive grease are both obtained by adding a thermally conductive filler thereto for the purpose of imparting a thermal conductivity, and a demerit with either a thermally conductive sheet or a thermally conductive grease is such that a sufficient thermal conduction effect cannot be achieved due to a restriction on an upper limit of the amount of such thermally conductive filler added. That is, in the case of a thermally conductive sheet, obstacles to a workability and a processability in a production process thereof need to be eliminated; and in the case of a thermally conductive grease, an upper limit of an apparent viscosity thereof needs to be restricted to a certain level such that there will occur no problem in a workability when coating a heat generating electronic part or the like therewith using a syringe or the like.

In this regard, there have been proposed a method of adding a low-melting-point metal into a thermally conductive paste (JP-A-Hei 7-207160 and JP-A-Hei 8-53664), and a granular material capable of immobilizing and thus stabilizing a liquid metal in a three-phase composite (JP-A-2002-121292). However, the problems with these thermally conductive materials employing low-melting-point metals are, for example, such that a part(s) other than the part to be coated will be contaminated, and that an oily substance will leak out if used for a long period of time. In order to solve these problems, there has been proposed a method of dispersing gallium and/or a gallium alloy into an addition-curable silicone (Japanese Patent No.4551074); when the composition has a large thickness, there will be observed a low thermal conductivity, which has led to an insufficiently satisfactory result(s). Further, there has been proposed a method for raising the thermal conductivity thereof (Japanese Patent No.4913874 and Japanese Patent No.5640945); a satisfactory performance(s) cannot be delivered as cracks and voids occur easily at the time of curing.

In addition, as for a conventional addition-curable silicone composition, under the coexistence of a water content present in the system and a hydrosilylation catalyst as typified by a platinum catalyst, the hydrogens of the Si-H groups derived from the hydrogen polysiloxane will leave such that air bubbles of a hydrogen gas will occur in the system whereby the thermal conductivity may be impaired as these air bubbles turn into voids in the cured product.

### SUMMARY OF THE INVENTION

Thus, it is an object of the present invention to provide a thermally conductive silicone composition containing a required and sufficient amount of a material that is superior in thermal conduction property and is uniformly dispersed in the state of fine particles in a matrix comprised of a resin component, where the composition can then be turned into a cured product exhibiting no cracks and voids, and having a favorable thermal conductivity.

In order to solve the above problems, the inventors of the present invention diligently conducted a series of studies and completed the invention as follows. That is, the inventors found that by adding gallium and/or an alloy thereof that have a low melting point, a thermally conductive filler and a palladium powder to an addition-curable silicone composition, there can be easily obtained a composition with the gallium and/or the alloy thereof being uniformly dispersed therein in the state of fine particles, and then in a step of turning the composition into a cured product via a heating treatment, the occurrence of cracks and voids can be inhibited, and a cured product obtained thereby is able to realize a high heat dissipation performance.

Specifically, the present invention is to provide the following curable organopolysiloxane composition and a cured product thereof.
[1] A thermally conductive silicone composition comprising:
   (A) 100 parts by mass of an organopolysiloxane having at least two silicon atom-bonded aliphatic unsaturated hydrocarbon groups per each molecule, and having a kinetic viscosity of 10 to 1,000,000 mm²/s at 25 °C as measured by an Ostwald viscometer;
   (B) an organohydrogenpolysiloxane having at least two silicon atom-bonded hydrogen atoms per each molecule, the component (B) being in an amount where the number of the silicon atom-bonded hydrogen atoms therein is 0.5 to 5.0 per 1 alkenyl group in the component (A);
   (C) 3,000 to 12,000 parts by mass of at least one selected from the group consisting of gallium and a gallium alloy that have a melting point of -20 to 70°C;
   (D) 10 to 1,000 parts by mass of a thermally conductive filler having an average particle size being a mean volume diameter [MV] on volumetric basis measured by a particle size analyzer of 0.1 to 100 µm;
   (E) a platinum group metal catalyst;
   (F) a palladium powder having a cumulative average particle size on volumetric basis of 1 to 100 nm as measured by a particle size analyzer; and
   (G-1) 0.1 to 500 parts by mass of an organopolysiloxane represented by the following general formula (1): 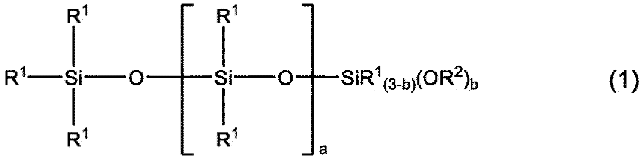
   wherein R¹ independently represents an aliphatic unsaturated bond-free substituted or unsubstituted monovalent hydrocarbon group having 1 to 10 carbon atoms; R² independently represents an alkyl group, an alkenyl group or an acyl group; a is an integer of 5 to 100; and b is an integer of 1 to 3.
[2] The thermally conductive silicone composition according to [1] wherein the component (F) is in an amount of 0.00001 to 1.0 parts by mass per 100 parts by mass of the component (A).
[3] The thermally conductive silicone composition according to any one of [1] to [2], wherein the component (F) is supported on a carrier other than palladium.
[4] The thermally conductive silicone composition according to [3], wherein the carrier is silica.
[5] The thermally conductive silicone composition according to any one of [1] to [4], further comprising:
   (G-2) an alkoxysilane compound that is contained by an amount of 0.1 to 100 parts by mass per 100 parts by mass of the component (A), and is represented by the following general formula (2):

   R³_{c}R⁴_{d}Si(OR⁵)_{4-c-d} (2)

   wherein R³ independently represents an alkyl group having 6 to 16 carbon atoms; R⁴ independently represents a substituted or unsubstituted monovalent hydrocarbon group having 1 to 8 carbon atoms; R⁵ independently represents an alkyl group having 1 to 6 carbon atoms; c is an integer of 1 to 3; d is an integer of 0 to 2; and a sum of c+d is an integer of 1 to 3.
[6] The thermally conductive silicone composition according to any one of [1] to [5], further comprising:
   (G-3) a trifluoropropyl trimethoxysilane that is contained by an amount of 0.1 to 100 parts by mass per 100 parts by mass of the component (A).
[7] The thermally conductive silicone composition according to any one of [1] to [6], further comprising:
   (H) at least one addition reaction control agent selected from the group consisting of an acetylene compound, a nitrogen compound, an organic phosphorus compound, an oxime compound and an organic chloro compound, the component (H) being in an amount of 0.1 to 5 parts by mass per 100 parts by mass of the component (A).
[8] The thermally conductive silicone composition according to any one of [1] to [7], wherein the component (C) is dispersed in a state of particles having an average particle size of 1 to 200 µm in the composition.
[9] A cured product of the thermally conductive silicone composition according to any one of [1] to [8].

Since the thermally conductive silicone composition of the present invention is in the state of a grease before curing, it has a favorable workability when applied to a heat generating electronic part such as a CPU, and when pressurizing a heat dissipation member against such part, the composition will conform with the convexities and concavities on the surfaces of the two so that they can be brought into a close contact with each other without leaving a gap therebetween, thereby causing no interfacial thermal resistance. Further, in a heating treatment step where the thermally conductive silicone composition of the present invention is to be cured by an addition reaction, not only cracks, but voids derived from the hydrogens generated by a dehydrogenation reaction in the system can also be inhibited, thus allowing a cured product obtained to exhibit a high heat dissipation capability.

### DETAILED DESCRIPTION OF THE INVENTION

### Thermally conductive silicone composition

### (A) Organopolysiloxane

A component (A) of the composition of the present invention is an organopolysiloxane having at least two silicon atom-bonded aliphatic unsaturated hydrocarbon groups per each molecule, and is a main agent (base polymer) in an addition reaction curing system of the present invention.

A kinetic viscosity of the component (A) at 25°C is 10 to 1,000,000 mm²/s, preferably 50 to 500,000 mm²/s. When the kinetic viscosity is lower than 10 mm²/s, a cured product will become brittle and more likely to exhibit cracks; when the kinetic viscosity is higher than 1,000,000 mm²/s, the viscosity of the composition will become too high such that the composition itself will not be able to be handled easily.

Here, in the present invention, a kinetic viscosity is a value measured by an Ostwald viscometer at 25°C.

There are no restrictions on the molecular structure of the organopolysiloxane as the component (A); there may be listed, for example, a linear structure, a branched structure or a partially branched linear structure, among which a linear structure is particularly preferred.

The number of the silicon atom-bonded aliphatic unsaturated hydrocarbon groups in the component (A) may be 2 or more, preferably 2 to 10, more preferably 2 to 5, per each molecule.

Examples of such aliphatic unsaturated hydrocarbon group(s) include alkenyl groups such as a vinyl group, allyl group, 1-butenyl group and 1-hexenyl group; a vinyl group is preferred in terms of ease of synthesis and cost. This aliphatic unsaturated hydrocarbon group may be bonded to any of the silicon atom at the molecular chain end or the silicon atom present in the midway of the molecular chain; in order to achieve a more favorable flexibility of the cured product obtained, it is preferred that the aliphatic unsaturated hydrocarbon group only be bonded to the silicon atom at the molecular chain end.

As a silicon atom-bonded group other than the silicon atom-bonded aliphatic unsaturated hydrocarbon group, a substituted or unsubstituted monovalent hydrocarbon group may for example be selected, specific examples of which include an alkyl group such as a methyl group, an ethyl group, a propyl group, a butyl group, a pentyl group, a hexyl group, a heptyl group, an octyl group, a nonyl group, a decyl group and a dodecyl group; a cycloalkyl group such as a cyclopentyl group and a cyclohexyl group; an aryl group such as a phenyl group, a tolyl group, a xylyl group and a naphthyl group; an aralkyl group such as a benzyl group, a 2-phenylethyl group and a 2-phenylpropyl group; and a halogenated alkyl group such as a chloromethyl group, a 3,3,3-trifluoropropyl group and a 3-chloropropyl group. Here, in terms of synthesis and economic efficiency, it is preferred that 90% or more of them are methyl groups.

Preferable and specific examples of such organopolysiloxane include a polydimethylsiloxane with both ends of its molecular chain being blocked by a dimethylvinylsiloxy group; a polydimethylsiloxane with both ends of its molecular chain being blocked by a methyldivinylsiloxy group; and a copolymer of methylphenylsiloxane and a dimethylsiloxane with both ends of its molecular chain being blocked by a dimethylvinylsiloxy group. As for the organopolysiloxane as the component (A), one kind thereof may be used alone, or two or more kinds thereof may be used in combination.

### (B) Organohydrogenpolysiloxane

A component (B) of the composition of the present invention is an organohydrogenpolysiloxane having at least two silicon atom-bonded hydrogen atoms (referred to as "Si-H groups" hereunder) per each molecule, and is a component acting as a cross-linking agent for the component (A). That is, due to the action of a later-described platinum-based catalyst as a component (E), the Si-H groups in the component (B) will be added to the alkenyl groups in the component (A) via a hydrosilylation reaction, thereby allowing there to be obtained a crosslinked cured product having a crosslinking bond-containing three dimensional network structure.

The number of the Si-H groups in the component (B) is 2 or more, preferably 2 to 30, per each molecule. There are no particular restrictions on the molecular structure of the component (B) so long as the abovementioned requirements are met; the molecular structure thereof may for example be any of a conventionally known linear structure, cyclic structure, branched structure, three-dimensional network structure (resin structure) or the like. The number of the silicon atoms per each molecule (or polymerization degree) is normally 3 to 1,000, preferably 5 to 400, more preferably 10 to 300, even more preferably 10 to 100, particularly preferably 10 to 60.

As a silicon atom-bonded group other than the Si-H group, there may be selected an aliphatic unsaturated bond-free substituted or unsubstituted monovalent hydrocarbon group preferably having 1 to 10, more preferably 1 to 6 carbon atoms. Specific examples thereof include an alkyl group such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group and a decyl group; an aryl group such as a phenyl group, a tolyl group, a xylyl group and a naphthyl group; an aralkyl group such as a benzyl group, a phenylethyl group and a phenylpropyl group; and a group obtained by substituting part of or all the hydrogen atoms in any of these groups with halogen atoms such as fluorine and chlorine atoms, such as a 3,3,3-trifluoropropyl group. Among them, a methyl group is preferred in terms of ease of synthesis and cost.

Specific examples of the organohydrogenpolysiloxane as the component (B) include a copolymer of methylhydrogensiloxane and a dimethylsiloxane with both ends of its molecular chain being blocked by a dimethylhydrogensiloxy group; a copolymer of dimethylsiloxane, diphenylsiloxane and a methylhydrogensiloxane with both ends of its molecular chain being blocked by a dimethylhydrogensiloxy group; a copolymer of methylhydrogensiloxane and a dimethylsiloxane with one end thereof being blocked by a dimethylhydrogensiloxy group and the other end thereof being blocked by a trimethylsiloxy group; a copolymer of dimethylsiloxane, diphenylsiloxane and a methylhydrogensiloxane with one end thereof being blocked by a dimethylhydrogensiloxy group and the other end thereof being blocked by a trimethylsiloxy group; a copolymer consisting of (CH₃)₂HSiO_{1/2} unit, (CH₃)₃SiO_{1/2} unit, (CH₃)HSiO_{2/2} unit and SiO_{4/2} unit; a copolymer consisting of (CH₃)₂HSiO_{1/2} unit, (CH₃)₃SiO_{1/2} unit, (CH₃)HSiO_{2/2} unit, (CH₃)₂SiO_{2/2} unit and SiO_{4/2} unit; a copolymer consisting of (CH₃)₂HSiO_{1/2} unit, (CH₃)HSiO_{2/2}, (CH₃)₂SiO_{2/2} unit and SiO_{4/2} unit; a copolymer consisting of (CH₃)₂HSiO_{1/2} unit, SiO_{4/2} unit, (CH₃)HSiO_{2/2} unit, (CH₃)₂SiO_{2/2} unit and (C₆H₅)₃SiO_{1/2} unit; and a copolymer consisting of (CH₃)₂HSiO_{1/2} unit, (CH₃)₃SiO_{1/2} unit, (C₆H₅)₂SiO_{2/2} unit, (CH₃)HSiO_{2/2} unit, (CH₃)₂SiO_{2/2} unit and SiO_{4/2} unit.

The component (B) is to be added in an amount where the number of the Si-H groups in the component (B) will be 0.5 to 5.0, preferably 0.7 to 3.0, per 1 silicon atom-bonded aliphatic unsaturated hydrocarbon group in the component (A). When the amount of the component (B) added is smaller than the above lower limit, the grease will not be able to cure satisfactorily due to the fact that the composition cannot be sufficiently turned into a network structure. When the amount of the component (B) added is greater than the above upper limit, the thermally conductive silicone composition obtained will become so hard that a poor reliability will be incurred, and foaming will occur more easily as well.

As for the organohydrogenpolysiloxane as the component (B), one kind thereof may be used alone, or two or more kinds thereof may be used in combination.

### (C) Gallium and/or alloy thereof

A component (C) of the composition of the present invention is gallium and/or an alloy thereof that have a melting point of -20 to 70°C. This component (C) is a component added to impart a favorable thermal conductivity to the cured product obtained from the composition of the present invention; the addition of this component constitutes the characteristic(s) of the present invention.

As described above, the melting point of the component (C) needs to be in the range of -20 to 70°C. If used in the present invention, while those having a melting point of not higher than -20°C may also be employed physically, those having a melting point of lower than -20°C are unfavorable from an economical perspective as they are difficult to be obtained; in contrast, if the melting point is greater than 70°C, a poor workability will be observed as the component will not be able to rapidly melt in a preparation process of the composition. Thus, as mentioned above, an appropriate range of the melting point of the component (C) is the range of -20 to 70°C. Particularly, those having a melting point of -19 to 50°C are preferred as the preparation of the composition of the present invention will be easy.

The melting point of metal gallium is 29.8°C. Further, typical examples of a gallium alloy include a gallium-indium alloy such as Ga-In (mass ratio=75.4:24.6, melting point=15.7°C); a gallium-tin alloy, gallium-tin-zinc alloy, such as Ga-Sn-Zn (mass ratio=82:12:6, melting point=17°C); a gallium-indium-tin alloy such as Ga-In-Sn (mass ratio=68.5:21.5:10, melting point=-19°C, mass ratio=62:25:13, melting point=5.0°C, or mass ratio=21.5:16.0:62.5, melting point=10.7°C); and a gallium-indium-bismuth-tin alloy such as Ga-In-Bi-Sn (mass ratio=9.4:47.3:24.7:18.6, melting point=48.0°C).

As for such component (C), one kind thereof may be used alone, or two or more kinds thereof may be used in combination. Liquid or solid fine particles of the gallium and/or the alloy thereof present in the uncured composition of the present invention have a substantially spherical shape, and may contain an irregular shape(s). Further, these fine particles normally have an average particle size of 1 to 200 µm, preferably 5 to 150 µm, more preferably 10 to 100 µm. When this average particle size is too small, a coating workability will be problematic due to a poor extensibility resulting from an extremely high viscosity of the composition; in contrast, when this average particle size is too large, it will be difficult to coat a heat generating electronic part or the like with a thin film of the composition of the present invention due to an ununiformity of the composition. Here, as described above, since the composition is to be immediately stored under a low temperature after its preparation, the shape and average particle size of the fine particles and even the dispersed state thereof in the composition shall be maintained until the process for coating a heat generating electronic part or the like. Specifically, this average particle size was calculated by sandwiching the uncured composition with two pieces of glass slide, and then carrying out observation with VR-3000 manufactured by KEYENCE CORPORATION. That is, from an image captured by this measurement device, there were randomly selected 10 particles whose particle sizes were then individually measured before calculating an average value thereof.

This component (C) is added in an amount of 3,000 to 12,000 parts by mass per 100 parts by mass of the component (A). When the amount added is smaller than 300 parts by mass, the thermal conductivity will decrease such that a sufficient heat dissipation property cannot be achieved if the composition is thick. When the amount added is larger than 20,000 parts by mass, it will be difficult to obtain a uniform composition, and the composition may not be able to be obtained as an extensible grease-like composition due to its extremely high viscosity.

### (D) Thermally conductive filler

Together with the component (C), a thermally conductive filler (D) (provided that the component (C) is excluded) that is to be added to a conventionally known thermally conductive sheet or thermally conductive grease needs to be added to the composition of the present invention.

There are no particular restrictions on such component (D) so long as it has a favorable thermal conductivity; any conventionally known thermally conductive filler may be used, examples of which include an aluminum powder, a zinc oxide powder, an alumina powder, a boron nitride powder, an aluminum nitride powder, a silicon nitride powder, a copper powder, a diamond powder, a nickel powder, a zinc powder, a stainless steel powder and a carbon powder. Further, as for such component (D), one kind thereof may be used alone, or two or more kinds thereof may be used in combination.

Especially, from an availability and economical perspectives, particularly preferred are a zinc oxide powder and an alumina powder.

An average particle size of the component (D) is 0.1 to 100 µm, preferably 1 to 20 µm. When this average particle size is too small, a poor extensibility will be observed due to an extremely high viscosity of the composition obtained. In contrast, when this average particle size is too large, it will be difficult to obtain a uniform composition. Here, this average particle size is a mean volume diameter [MV] on volumetric basis that is measured by Microtrac MT3300EX (by Nikkiso Co., Ltd.).

A filler content of the component (D) is 10 to 1,000 parts by mass, preferably 50 to 500 parts by mass, per 100 parts by mass of the component (A). When the amount of the component (D) added is smaller than 10 parts by mass per 100 parts by mass of the component (A), the gallium and/or the alloy thereof will not be able to be uniformly dispersed in the component (A) or a mixture of the component (A) and a later-described component (G); when the amount of the component (D) added is larger than 1,000 parts by mass per 100 parts by mass of the component (A), the composition cannot be able to be obtained as an extensible grease-like composition due to a high viscosity thereof.

### (E) Platinum group metal catalyst

A platinum group metal catalyst as a component (E) of the composition of the present invention is a component added to obtain a three-dimensionally networked crosslinked cured product from the composition of the present invention by promoting an addition reaction between the silicon atom-bonded aliphatic unsaturated hydrocarbon groups in the component (A) and the Si-H groups in the component (B).

However, the platinum group metal catalyst as the component (E) does not contain a later-described palladium powder as a component (F).

As such component (E), there may be employed any known catalyst for use in a normal hydrosilylation reaction, examples of which include platinum metal (platinum black), chloroplatinic acid, a platinum-olefin complex, a platinum-alcohol complex, and a platinum coordination compound. The amount of the component (E) added may simply be an effective amount necessary for curing the composition of the present invention, and there are no particular restrictions imposed thereon; for example, normally, the component (E) is preferably in an amount of about 0.1 to 500 ppm, more preferably 1 to 200 ppm, in terms of platinum atoms with respect to the mass of the component (A).

### (F) Palladium powder

A component (F) of the composition of the present invention is a palladium powder, and is a component added to inhibit voids by absorbing hydrogens occurring in the system.

In terms of handling property at the time of blending and hydrogen adsorption efficiency, an average particle size of the palladium powder as the component (F) is 1 to 100 nm, preferably 5 to 70 nm. This average particle size is a cumulative average diameter on volumetric basis that is measured by Nanotrac UPA-EX150 manufactured by Nikkiso Co., Ltd.

In terms of void inhibition effect and thermal conduction path formation, it is preferred that the component (F) be added in an amount of 0.00001 to 1.0 parts by mass, more preferably 0.0005 to 0.1 parts by mass, per 100 parts by mass of the component (A).

There are no particular restrictions on a method for adding the component (F); the component (F) may be added to and dispersed in the composition as it is. Further, there may be added those with the component (F) being supported on a carrier as typified by a silica such as a fumed silica, a wet silica, a crystalline silica and a molten silica; or the component (F) may at first be dispersed in a solvent before being added to the composition. Furthermore, there may also be added to the composition a paste-like mixture obtained by uniformly dispersing the component (F) in organopolysiloxane or the like, using a device such as a triple roll mill. An average particle size of the carrier (e.g. crystalline silica) is a cumulative average diameter on volumetric basis that is measured by Microtrac MT3300EX manufactured by Nikkiso Co., Ltd.

As for the component (F), one kind thereof may be used alone, or two or more kinds thereof may be used in combination.

### (G-1) Surface treatment agent

A polysiloxane represented by the following general formula (1) is added to the composition of the present invention as a surface treatment agent (G-1). This component (G-1) is added for the purposes of hydrophobizing the gallium and/or the alloy thereof as the component (C) at the time of preparing the composition, and improving a wettability of the component (C) to the organopolysiloxane as the component (A) so as to uniformly disperse the component (C) as fine particles in the matrix comprised of the component (A).

Further, this component (G-1) likewise has a function of improving a surface wettability of the thermally conductive filler as the component (D) so as to achieve a favorable uniform dispersibility thereof.

The component (G-1) is a polysiloxane with one end of its molecular chain being blocked by a hydrolyzable group, as represented by the following general formula (1). As for this polysiloxane, a kinetic viscosity thereof at 25°C is preferably 10 to 10,000 mm²/s. Here, this kinetic viscosity is a value measured by an Ostwald viscometer at 25°C. 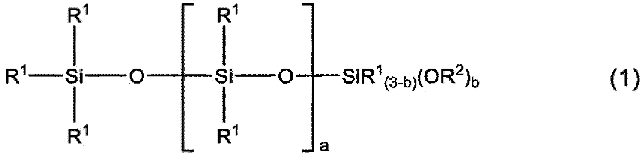 wherein R¹ independently represents an aliphatic unsaturated bond-free substituted or unsubstituted monovalent hydrocarbon group having 1 to 10 carbon atoms; R² independently represents an alkyl group, an alkenyl group or an acyl group. Further, a is an integer of 5 to 100, and b is an integer of 1 to 3.

In the general formula (1), R¹ represents an aliphatic unsaturated bond-free substituted or unsubstituted monovalent hydrocarbon group having 1 to 10, preferably 1 to 6 carbon atoms. Specific examples thereof include an alkyl group such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group and a decyl group; an aryl group such as a phenyl group, a tolyl group, a xylyl group and a naphthyl group; an aralkyl group such as a benzyl group, a phenylethyl group and a phenylpropyl group; and a group obtained by substituting part of or all the hydrogen atoms in any of these groups with halogen atoms such as fluorine and chlorine atoms, such as a 3,3,3-trifluoropropyl group. Among them, a methyl group is preferred in terms of ease of synthesis and cost.

In the general formula (1), examples of R² include an alkyl group such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group and a decyl group; an alkenyl group such as a vinyl group and an allyl group; and an acyl group such as a formyl group, an acetyl group and a benzoyl group. Among them, a methyl group and an ethyl group are particularly preferred.

The component (G-1) is added in an amount of 0.1 to 500 parts by mass, preferably 1 to 300 parts by mass, more preferably 10 to 250 parts by mass, per 100 parts by mass of the component (A). When the amount added is smaller than the above lower limit, the components (C) and (D) will not be able to be satisfactorily dispersed such that a uniform composition will not be able to be obtained. When the amount added is greater than the above upper limit, the amount of the component (A) will be relatively small such that it will be difficult for the composition obtained to harden, which may then lead to a situation where a thermal conduction performance will significantly deteriorate due to a deviation that occurs after coating a device such as CPU with the composition.

### Other components

In addition to the aforementioned essential components, the following components may also be added to the curable organopolysiloxane composition of the present invention if necessary.

### (H) Addition reaction control agent

An addition reaction control agent as a component (H) of the composition of the present invention is a component added on an as-needed basis; it is a component added to eliminate obstacles to the coating work of a heat generating electronic part or the like by securing a usable life (shell life, pot life) of the composition of the present invention as a result of inhibiting a hydrosilylation reaction brought about by the platinum-based catalyst at room temperature.

As such component (H), any known addition reaction control agent for use in a normal addition reaction-curable silicone composition may be used, examples of which include an acetylene compound such as 1-ethynyl-1-cyclohexanol and 3-butyn-1-ol; various nitrogen compounds; an organic phosphorus compound; an oxime compound; and an organic chloro compound.

The amount of the component (H) added varies depending on the amount of the component (E) used, and is thus inconclusive; there are no particular restrictions on the amount of the component (H) added, so long as it is used in an effective amount capable of inhibiting the progress of the hydrosilylation reaction. In terms of curability and securing a sufficient usable life of the composition of the present invention, the component (H) may normally be added in an amount of about 0.1 to 5 parts by mass per 100 parts by mass of the component (A). Particularly, in order to improve its dispersibility in the composition, this component (H) may be diluted, if necessary, with an organic solvent such as toluene, xylene or isopropyl alcohol before use.

Here, as for such component (H), one kind thereof may be used alone, or two or more kinds thereof may be used in combination.

Moreover, as a component (G-2), the composition of the present invention may further contain an alkoxysilane represented by the following general formula (2):

R³_{c}R⁴_{d}Si(OR⁵)_{4-c-d} (2)

wherein R³ independently represents an alkyl group having 6 to 16 carbon atoms; R⁴ independently represents a substituted or unsubstituted monovalent hydrocarbon group having 1 to 8 carbon atoms; R⁵ independently represents an alkyl group having 1 to 6 carbon atoms; c is an integer of 1 to 3; d is an integer of 0 to 2; and a sum of c+d is an integer of 1 to 3.

In the general formula (2), examples of R³ include a hexyl group, an octyl group, a nonyl group, a decyl group, a dodecyl group and a tetradecyl group. When the number of the carbon atoms is smaller than 6, there will be observed an insufficient improvement in wettability of the components (C) and (D); when the number of the carbon atoms is greater than 16, the organosilane in the component (G-2) will solidify at normal temperature, which will result not only in an inconvenient handling property, but also in an impaired low-temperature property of the composition obtained.

Further, in the general formula (2), examples of R⁴ include an alkyl group such as a methyl group, an ethyl group, a propyl group, a hexyl group and an octyl group; a cycloalkyl group such as a cyclopentyl group and a cyclohexyl group; an alkenyl group such as a vinyl group and an allyl group; an aryl group such as a phenyl group and a tolyl group; an aralkyl group such as a 2-phenylethyl group and a 2-methyl-2-phenylethyl group; and a halogenated hydrocarbon group such as a 3,3,3-trifluoropropyl group, a 2-(nonafluorobutyl)ethyl group, a 2-(heptadecafluorooctyl)ethyl group and a p-chlorophenyl group. Among them, a methyl group and an ethyl group are particularly preferred.

Further, in the general formula (2), examples of R⁴ include an alkyl group such as a methyl group, an ethyl group, a propyl group, a butyl group, a pentyl group and a hexyl group. Among them, a methyl group and an ethyl group are preferred.

Preferable specific examples of the component (G-2) are as follows.

C₆H₁₃Si(OCH₃)₃

C₁₀H₂₁Si(OCH₃)₃

C₁₂H₂₅Si(OCH₃)₃

C₁₂H₂₅Si(OC₂H₅)₃

C₁₀H₂₁(CH₃)Si(OCH₃)₂

C₁₀H₂₁(C₆H₅)Si(OCH₃)₂

C₁₀H₂₁(CH₃)Si(OC₂H₅)₂

C₁₀H₂₁(CH=CH₂)Si(OCH₃)₂

Here, as for such component (G-2), one kind thereof may be used alone, or two or more kinds thereof may be used in combination. Further, the viscosity of the composition tends to fall into a desired range when the component (G-2) is contained by an amount of not smaller than 0.1 parts by mass per 100 parts by mass of the component (A); whereas when such amount of the component (G-2) is greater than 100 parts by mass, there will be observed no enhancement in wetter effect, and an uneconomical consequence will be incurred. Thus, it is preferred that the component (G-2) be contained by an amount of 0.1 to 100 parts by mass, more preferably 1 to 50 parts by mass.

Also, as the case may be, the composition of the present invention may further contain a trifluoropropyl trimethoxysilane as a component (G-3). Further, the viscosity of the composition tends to fall into a desired range when the component (G-3) is contained by an amount of not smaller than 0.1 parts by mass per 100 parts by mass of the component (A); whereas when such amount of the component (G-3) is greater than 100 parts by mass, there will be observed no enhancement in wetter effect, and an uneconomical consequence will be incurred. Thus, it is preferred that the component (G-3) be contained by an amount of 0.1 to 100 parts by mass, more preferably 1 to 50 parts by mass.

Here, each of the components (G-1), (G-2) and (G-3) may be used alone, or they may be variously used in combination.

### Optional components other than the above components

In addition to the above components (A) to (H), the composition of the present invention may also contain, if necessary, a conventionally known antioxidant such as 2,6-di-t-butyl-4-methylphenol. Further, there may also be added, for example, an adhesion aid, a mold release agent, a dye, a pigment, a flame retardant, an antisettling agent and/or a thixotropy improving agent, if necessary.

### Viscosity of composition

In terms of workability, it is preferred that the composition of the present invention have a viscosity of 10 to 1,000 Pa·s, more preferably 30 to 400 Pa·s, when measured at 25°C. Here, this viscosity is a value measured by a spiral viscometer PC-1TL (by Malcom Co.,Ltd.) at 25°C.

### Preparation of the composition of the present invention

The thermally conductive silicone composition of the present invention can be produced by a production method including:
(i) a step of obtaining a uniform mixture (i) by kneading the components (A), (C), (D), (F) and (G-1) as well as the components (G-2) and (G-3) if contained, at a temperature that is in a range of 20 to 120°C and not lower than the melting point of the component (C);
(ii) a step of obtaining a mixture (ii) by stopping kneading the mixture (i) and then cooling the mixture (i) to a temperature lower than the melting point of the component (C); and
(iii) a step of obtaining a uninform mixture (iii) by adding the components (B) and (E), the component (H) if contained as well as possibly other components to the mixture (ii), and then kneading them at a temperature lower than the melting point of the component (C).
However, the production method shall not be limited to these descriptions.

In the step (i), a fluid matter of the gallium and/or the alloy thereof as the component (C), the thermally conductive filler as the component (D) and the palladium powder as the component (F) are to be uniformly dispersed into a mixed liquid combining the component (A), the component (G-1), and at least one of the components (G-2) and (G-3) if the components (G-2) and (G-3) are to be contained.

It is preferred that the temperature reducing operation to the cooling operation be performed rapidly in the step (ii). In the step (ii), as for the component (C) in the state of liquid or solid fine particles that are uniformly dispersed in the matrix comprised of the mixed liquid combining the component (A), the component (G-1), and at least one of the components (G-2) and (G-3) if the components (G-2) and (G-3) are to be contained, the average particle size of the component (C) and the dispersed state thereof are maintained.

It is preferred that the step (iii) also be finished as rapidly as possible. At the time when the step (iii) is finished, there shall be no substantial changes in the dispersed state of the fine particles of the component (C). Next, after the step (iii) is finished, the composition produced is preferably to be placed into a container, followed by immediately storing the same in a freezer, a refrigerator or the like of a temperature of about -30 to -10°C, preferably -25 to -15°C. Further, it is also preferred that a refrigeration equipment-installed vehicle or the like be used for the purpose of, for example, transporting the composition. In this way, by storing and transporting the composition under a low temperature, the composition and dispersed state of the composition of the present invention can be stably retained even when stored for a long period of time.

When curing the composition of the present invention, the curing process can be performed by keeping the composition under a temperature of 80 to 180°C for about 30 to 240 min. The composition of the present invention may also be cured while applying a pressure thereto. Further, post curing may also be performed after the composition was cured.

The cured product of the composition of the present invention may be interposed between a heat generating electronic part and a heat dissipation member, and thus be used as a thermally conductive cured product for forming a thermally conductive layer therebetween.

### WORKING EXAMPLES

The present invention is described in greater detail hereunder with reference to working examples; the present invention shall not be limited to the following working examples.

The components (A) to (H) used in the following working and comparative examples are as follows. Here, a viscosity is a value measured by the spiral viscometer PC-1TL (by Malcom Co.,Ltd.); a kinetic viscosity is a value measured by an Ostwald viscometer (by SIBATA SCIENTIFIC TECHNOLOGY LTD.).

### Component (A):

Dimethylpolysiloxane with both ends being blocked by a dimethylvinylsilyl group, and having the following kinetic viscosities at 25°C
(A-1) Kinetic viscosity: 100 mm²/s
(A-2) Kinetic viscosity: 600 mm²/s
(A-3) Kinetic viscosity: 30,000 mm²/s

### Component (B):

(B-1) Organohydrogenpolysiloxane represented by the following structural formula: 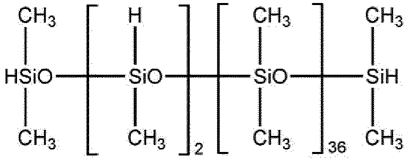 wherein the sequence of the siloxane units in each bracket is indefinite.
(B-2) Organohydrogenpolysiloxane represented by the following structural formula: 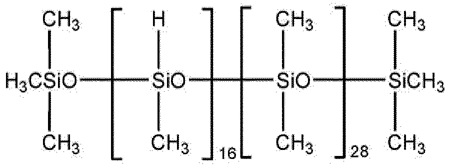 wherein the sequence of the siloxane units in each bracket is indefinite.
(B-3) Organohydrogenpolysiloxane represented by the following structural formula:

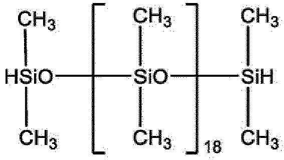

### Component (C):

(C-1) Metal gallium (melting point=29.8°C)
(C-2) Ga-In alloy (mass ratio=75.4:24.6, melting point=15.7°C)
(C-3) Ga-In-Sn alloy (mass ratio=68.5:21.5:10, melting point=-19°C)
(C-4) Ga-In-Sn alloy (mass ratio=62:25:13, melting point=5.0°C)
(C-5) Metal indium (melting point=156.2°C) <for comparison>

### Component (D):

(D-1) Alumina powder (average particle size: 8.2 µm)
(D-2) Zinc oxide powder (average particle size: 1.0 µm)

### Component (E):

(E-1) Dimethylpolysiloxane solution of platinum-divinyltetramethyldisiloxane complex (with both ends being blocked by a dimethylvinylsilyl group, kinetic viscosity: 600 mm²/s ) (platinum atom content: 1% by mass)

### Component (F):

(F-1) Palladium powder (average particle size: 5 nm)
(F-2) 1.0% by mass palladium-supported crystalline silica (average particle size of palladium powder: 2 nm, average particle size of crystalline silica: 5 µm)
(F-3) 0.5% by mass palladium-supported dry silica (average particle size of palladium powder: 7 nm, BET specific surface area of dry silica: 130 m²/g)

### Component (G):

(G-1) Dimethylpolysiloxane with one end being blocked by a trimethoxysilyl group, as represented by the following structural formula and having a kinetic viscosity of 32 mm²/s 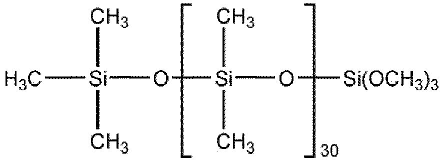
(G-2) Organosilane represented by a structural formula C₁₀H₂₁Si(OCH₃)₃
(G-3) Trifluoropropyltrimethoxysilane

Here, in the procedure for preparing the composition, the term "component (G)" collectively refers to the components (G-1), (G-2) and/or (G-3) used in each example shown in Tables 1 and 2.

### Component (H):

(H-1) 1-ethynyl-1-cyclohexanol

### Working examples 1 to 6; comparative examples 1 to 6

### Preparation of composition

Each component was taken at the compounding ratio(s) shown in Tables 1 and 2, and the composition was then prepared as follows.

The components (A), (C), (D), (F) and (G) were added into a conditioning mixier (Awatori Rentaro by THINKY CORPORATION) having an inner capacity of 250 mL, followed by raising the temperature to 70°C, and then performing kneading for 5 min with the temperature being maintained at such temperature. Subsequently, kneading was stopped, and the mixture was then cooled to 25°C.

Next, the components (B), (E) and (H) were added to the mixture of the components (A), (C), (D), (F) and (G), followed by uniformly kneading them at 25°C so as to obtain each composition.

### Viscosity measurement

In each example, the absolute viscosity of the composition was measured by PC-1TL (by Malcom Co.,Ltd.) (10 rpm) at 25°C.

### Kinetic viscosity measurement

In each example, the kinetic viscosity of the composition was measured by an Ostwald viscometer (by SIBATA SCIENTIFIC TECHNOLOGY LTD.) at 25°C.

### Thermal conductivity measurement

Each composition prepared as above was poured into a mold having a thickness of 3 cm, followed by overlaying a kitchen wrap thereon, and then using Model QTM-500 (by Kyoto Electronics Manufacturing Co., Ltd.) to perform measurement.

### Particle size measurement of component (C)

Here, 0.1 g of each composition prepared as above was placed and sandwiched between two pieces of glass slide; 10 particles were randomly selected from an image captured by VR-3000 (by KEYENCE CORPORATION), followed by measuring the particle size of each particle, and then calculating an average value thereof.

### Thermal resistance measurement

Each composition prepared as above was placed and sandwiched between Ni plates having a size of 15 mm × 15 mm × thickness 1 mm. The composition was then cured by performing heating at 150°C for 60 min while applying a pressure of 137.9 kPa thereto, thus obtaining a test piece for use in thermal resistance measurement. A thermal resistance measurement device (LFA447 by NETZSCH Japan K.K.) was used to perform measurement.

### Void test

Here, 0.1 g of each composition was placed and sandwiched between two pieces of glass slides having a size of 5×7 cm; the composition was then cured by performing heating on a hot plate that had been heated to 150°C for an hour while applying a load of 1 kgf thereto. After being cooled to 25°C, the cured product sandwiched between the glass slides was observed visually and with a microscope (VR-3000 by KEYENCE CORPORATION).

### Evaluation

·Cracks were confirmed when observed visually: ×
·One or more circular voids (voids) with a diameter of not smaller than 0.5 mm were confirmed when observed with the microscope: ×
·Cracks and circular voids (voids) with a diameter of not smaller than 0.5 mm were not confirmed at all when observed either visually or with the microscope: ∘

### Particle size measurement of component (D)

The average particle size of the thermally conductive filler is a cumulative average diameter on volumetric basis that is measured by Microtrac MT3300EX (by Nikkiso Co., Ltd.).

### Particle size measurement of component (F)

The average particle size of the palladium powder is a cumulative average diameter on volumetric basis that is measured by Nanotrac UPA-EX150 (by Nikkiso Co., Ltd.). Further, the average particle size of the crystalline silica as a carrier is a cumulative average diameter on volumetric basis that is measured by Microtrac MT3300EX (by Nikkiso Co., Ltd.).

**Table 1**

| | | Working example | | | | | |
|---|---|---|---|---|---|---|---|
| | | 1 | 2 | 3 | 4 | 5 | 6 |
| Component (A) | A - 1 | 60 | 40 | 50 | | | 70 |
| | A - 2 | | | | 100 | 80 | |
| | A - 3 | 40 | 60 | 50 | | 20 | 30 |
| Component (B) | B - 1 | | | | | 6.8 | 5.4 |
| | B - 2 | 7.0 | 6.0 | 4.2 | 1.6 | | 3.8 |
| | B - 3 | | | 7.5 | 2.5 | 2.0 | |
| Component (C) | C - 1 | 3500 | | | | | |
| | C - 2 | | 6000 | | | 6000 | |
| | C - 3 | | | 4000 | | | 12000 |
| | C - 4 | | | | 7000 | | |
| Component (D) | D - 1 | 200 | 100 | 100 | 50 | 50 | 50 |
| | D - 2 | 50 | 50 | 50 | 50 | 50 | |
| Component (E) | E - 1 | 0.3 | 0.3 | 0.3 | 0.3 | 0.3 | 0.3 |
| Component (F) | F - 1 | 0.05 | | | | 0.05 | |
| | F - 2 | | 4 | 4 | | | 4 |
| | F - 3 | | | | 6 | | |
| Component (G) | G - 1 | 50 | 50 | 50 | 100 | 100 | 300 |
| | G - 2 | | 30 | 10 | 20 | | 10 |
| | G - 3 | | | 10 | | | |
| Component (H) | H - 1 | 0.3 | 0.3 | 0.3 | 0.3 | 0.3 | 0.3 |
| H/Vi* | | 1.5 | 1.8 | 1.5 | 0.8 | 1.0 | 1.0 |
| Viscosity [Pa·s] | | 70 | 85 | 75 | 90 | 100 | 220 |
| Thermal conductivity [W/mK] | | 5.2 | 6.4 | 6.0 | 6.8 | 6.5 | 7.2 |
| Particle size of component (C) [µm] | | 40 | 50 | 55 | 45 | 35 | 45 |
| Thermal resistance [mm²K/W] | | 1.2 | 1.2 | 1.5 | 1.3 | 1.1 | 1.2 |
| Void test | | ○ | ○ | ○ | ○ | ○ | ○ |

| | | | | | | | |
|---|---|---|---|---|---|---|---|
| *; The number of the silicon atom-bonded hydrogen atoms in the component (B) per 1 silicon atom-bonded aliphatic unsaturated hydrocarbon group in the component (A) is expediently denoted as H/Vi. | | | | | | | |

**Table 2**

| | | Comparative example | | | | | |
|---|---|---|---|---|---|---|---|
| | | 1 | 2 | 3 | 4 | 5 | 6 |
| Component (A) | A - 1 | 40 | 50 | | 40 | 100 | 60 |
| | A - 2 | | | 100 | | | |
| | A - 3 | 60 | 50 | | 60 | | 40 |
| Component (B) | B - 1 | | 40 | | 15 | | |
| | B - 2 | 6.0 | 11 | 0.6 | | 5.5 | 7.0 |
| | B - 3 | | | | 4.2 | 23 | |
| Component (C) | C - 1 | | 4000 | | | | |
| | C - 2 | 6000 | | | | 25000 | |
| | C - 3 | | | 7000 | | | |
| | C - 4 | | | | 200 | | |
| | C - 5 | | | | | | 7000 |
| Component (D) | D - 1 | 100 | 100 | 50 | 200 | 50 | 100 |
| | D - 2 | 50 | 50 | 50 | 50 | | |
| Component (E) | E - 1 | 0.3 | 0.3 | 0.3 | 0.3 | 0.3 | 0.3 |
| Component (F) | F - 1 | | 0.05 | | 0.05 | | |
| | F - 2 | | | | | 4 | 4 |
| | F - 3 | | | 6 | | | |
| Component (G) | G - 1 | 50 | 50 | 100 | 50 | 300 | 100 |
| | G - 2 | 30 | 20 | 20 | | 50 | 20 |
| | G - 3 | | | | 10 | | |
| Component (H) | H - 1 | 0.3 | 0.3 | 0.3 | 0.3 | 0.3 | 0.3 |
| H/Vi* | | 1.8 | 5.5 | 0.2 | 1.5 | 1.5 | 1.5 |
| Viscosity [Pa·s] | | 80 | 75 | 80 | 8 | * 2 | * 2 |
| Thermal conductivity [W/mK] | | 6.3 | 5.5 | 6.7 | 0.8 | | |
| Particle size of component (C) [µm] | | 45 | 40 | 40 | 100 | | |
| Thermal resistance [mm²K/W] | | 3.2 | 6.8 | * 1 | 25 | | |
| Void test | | × | × | | ○ | | |

| | | | | | | | |
|---|---|---|---|---|---|---|---|
| *; The number of the silicon atom-bonded hydrogen atoms in the component (B) per 1 silicon atom-bonded aliphatic unsaturated hydrocarbon group in the component (A) is expediently denoted as H/Vi. *1; Unmeasurable as curing failed. *2; Unmeasurable due to a failure in obtaining a grease-like uniform composition. | | | | | | | |

As can be seen from the results shown in Tables 1 and 2, in the cases of the thermally conductive silicone compositions of the working examples 1 to 6 satisfying the requirements of the present invention, a uniform and grease-like composition was able to be obtained, the component (C) which is a thermally conductive filler was able to be uniformly dispersed in the state of fine particles, cracks and voids after curing were able to be inhibited, and a cured product obtained thereby was able to realize a high heat dissipation performance.

Meanwhile, in the comparative example 1 where the palladium powder was not employed; and the comparative example 2 where H/Vi was too high, there were observed voids owing to the hydrogens generated in the system. Further, in the comparative example 3 where H/Vi was too low, there occurred a problem that the composition failed to cure; in the comparative example 4 where the component (C) is contained by a small amount, a sufficient heat dissipation performance failed to be secured. Moreover, in the comparative example 5 where the component (C) is contained by an excessively large amount; and the comparative example 6 where the melting point of the component (C) was too high, a grease-like uniform composition was not able to be obtained.

### Industrial applicability

Since the cured product of the thermally conductive silicone composition of the present invention has a favorable thermal conductivity, and exhibits no cracks and voids, a low thermal resistance can be achieved such that if used between an IC package such as a CPU and a heat dissipation fin-equipped heat dissipation member, heat removal can be carried out efficiently.

## Claims

1. A thermally conductive silicone composition comprising:
(A) 100 parts by mass of an organopolysiloxane having at least two silicon atom-bonded aliphatic unsaturated hydrocarbon groups per each molecule, and having a kinetic viscosity of 10 to 1,000,000 mm²/s at 25°C as measured by an Ostwald viscometer;
(B) an organohydrogenpolysiloxane having at least two silicon atom-bonded hydrogen atoms per each molecule, the component (B) being in an amount where the number of the silicon atom-bonded hydrogen atoms therein is 0.5 to 5.0 per 1 alkenyl group in the component (A);
(C) 3,000 to 12,000 parts by mass of at least one selected from the group consisting of gallium and a gallium alloy that have a melting point of -20 to 70°C;
(D) 10 to 1,000 parts by mass of a thermally conductive filler having an average particle size of 0.1 to 100 µm, the average particle size being a mean volume diameter [MV] on volumetric basis as measured by a particle size analyzer;
(E) a platinum group metal catalyst;
(F) a palladium powder having a cumulative average particle size on volumetric basis of 1 to 100 nm as measured by a particle size analyzer; and
(G-1) 0.1 to 500 parts by mass of an organopolysiloxane represented by the following general formula (1): 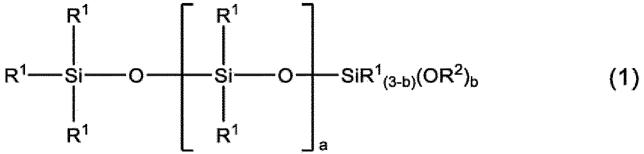 wherein R¹ independently represents an aliphatic unsaturated bond-free substituted or unsubstituted monovalent hydrocarbon group having 1 to 10 carbon atoms; R² independently represents an alkyl group, an alkenyl group or an acyl group; a is an integer of 5 to 100; and b is an integer of 1 to 3.

2. The thermally conductive silicone composition according to claim 1, wherein the component (F) is in an amount of 0.00001 to 1.0 parts by mass per 100 parts by mass of the component (A).

3. The thermally conductive silicone composition according to any one of claims 1 or 2, wherein the component (F) is supported on a carrier other than palladium.

4. The thermally conductive silicone composition according to claim 3, wherein the carrier is silica.

5. The thermally conductive silicone composition according to any one of claims 1 to 4, further comprising:
(G-2) an alkoxysilane compound that is contained by an amount of 0.1 to 100 parts by mass per 100 parts by mass of the component (A), and is represented by the following general formula (2):
R³_{c}R⁴_{d}Si(OR⁵)_{4-c-d} (2)
wherein R³ independently represents an alkyl group having 6 to 16 carbon atoms; R⁴ independently represents a substituted or unsubstituted monovalent hydrocarbon group having 1 to 8 carbon atoms; R⁵ independently represents an alkyl group having 1 to 6 carbon atoms; c is an integer of 1 to 3; d is an integer of 0 to 2; and a sum of c+d is an integer of 1 to 3.

6. The thermally conductive silicone composition according to any one of claims 1 to 5, further comprising:
(G-3) a trifluoropropyl trimethoxysilane that is contained by an amount of 0.1 to 100 parts by mass per 100 parts by mass of the component (A).

7. The thermally conductive silicone composition according to any one of claims 1 to 6, further comprising:
(H) at least one addition reaction control agent selected from the group consisting of an acetylene compound, a nitrogen compound, an organic phosphorus compound, an oxime compound and an organic chloro compound, the component (H) being in an amount of 0.1 to 5 parts by mass per 100 parts by mass of the component (A).

8. The thermally conductive silicone composition according to any one of claims 1 to 7, wherein the component (C) is dispersed in a state of particles having an average particle size of 1 to 200 µm in the composition.

9. A cured product of the thermally conductive silicone composition according to any one of claims 1 to 8.

## Patentansprüche

1. Wärmeleitfähige Silikonzusammensetzung, aufweisend:
(A) 100 Massenteile eines Organopolysiloxans mit mindestens zwei siliciumatomgebundenen aliphatischen ungesättigten Kohlenwasserstoffgruppen pro Molekül und mit einer kinetischen Viskosität von 10 bis 1.000.000 mm²/s bei 25°C, gemessen mit einem Ostwald-Viskosimeter;
(B) ein Organohydrogenpolysiloxan mit mindestens zwei siliciumatomgebundenen Wasserstoffatomen pro Molekül, wobei die Komponente (B) in einer Menge vorliegt, in der die Anzahl der siliciumatomgebundenen Wasserstoffatome darin 0,5 bis 5,0 pro 1 Alkenylgruppe in der Komponente (A) beträgt;
(C) 3.000 bis 12.000 Massenteile von mindestens einem, ausgewählt aus der Gruppe bestehend aus Gallium und einer Galliumlegierung, die einen Schmelzpunkt von -20 bis 70°C aufweisen;
(D) 10 bis 1.000 Massenteile eines wärmeleitfähigen Füllstoffs mit einer durchschnittlichen Teilchengröße von 0,1 bis 100 µm, wobei die durchschnittliche Teilchengröße ein mittlerer Volumendurchmesser [MV] auf volumetrischer Basis ist, gemessen mit einem Teilchengrößenanalysator;
(E) einen Platingruppenmetallkatalysator;
(F) ein Palladiumpulver mit einer kumulativen durchschnittlichen Teilchengröße auf volumetrischer Basis von 1 bis 100 nm, gemessen mit einem Teilchengrößenanalysator; und
(G-1) 0,1 bis 500 Massenteile eines Organopolysiloxans, dargestellt durch die folgende allgemeine Formel (1): 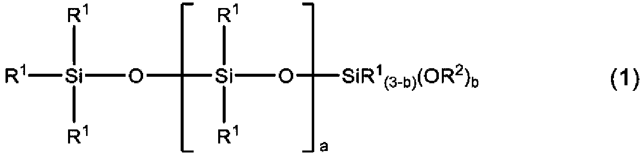 wobei R¹ unabhängig eine aliphatische ungesättigte bindungsfreie substituierte oder unsubstituierte einwertige Kohlenwasserstoffgruppe mit 1 bis 10 Kohlenstoffatomen darstellt; R² unabhängig eine Alkylgruppe, eine Alkenylgruppe oder eine Acylgruppe darstellt; a eine ganze Zahl von 5 bis 100 ist; und b eine ganze Zahl von 1 bis 3 ist.

2. Wärmeleitfähige Silikonzusammensetzung gemäß Anspruch 1, wobei die Komponente (F) in einer Menge von 0,00001 bis 1,0 Massenteilen pro 100 Massenteile der Komponente (A) vorliegt.

3. Wärmeleitfähige Silikonzusammensetzung gemäß einem der Ansprüche 1 oder 2, wobei die Komponente (F) auf einem anderen Träger als Palladium geträgert ist.

4. Wärmeleitfähige Silikonzusammensetzung gemäß Anspruch 3, wobei der Träger Siliciumdioxid ist.

5. Wärmeleitfähige Silikonzusammensetzung gemäß einem der Ansprüche 1 bis 4, ferner aufweisend:
(G-2) eine Alkoxysilanverbindung, die in einer Menge von 0,1 bis 100 Massenteilen pro 100 Massenteile der Komponente (A) enthalten ist und durch die folgende allgemeine Formel (2) dargestellt ist:
R³_{c}R⁴_{d}Si(OR⁵)_{4-c-d} (2)
wobei R³ unabhängig eine Alkylgruppe mit 6 bis 16 Kohlenstoffatomen darstellt; R⁴ unabhängig eine substituierte oder unsubstituierte einwertige Kohlenwasserstoffgruppe mit 1 bis 8 Kohlenstoffatomen darstellt; R⁵ unabhängig eine Alkylgruppe mit 1 bis 6 Kohlenstoffatomen darstellt; c eine ganze Zahl von 1 bis 3 ist; d eine ganze Zahl von 0 bis 2 ist; und eine Summe von c+d eine ganze Zahl von 1 bis 3 ist.

6. Wärmeleitfähige Silikonzusammensetzung gemäß einem der Ansprüche 1 bis 5, ferner aufweisend:
(G-3) ein Trifluorpropyltrimethoxysilan, das in einer Menge von 0,1 bis 100 Massenteilen pro 100 Massenteile der Komponente (A) enthalten ist.

7. Wärmeleitfähige Silikonzusammensetzung gemäß einem der Ansprüche 1 bis 6, ferner aufweisend:
(H) mindestens ein Additionsreaktionssteuerungsmittel, ausgewählt aus der Gruppe bestehend aus einer Acetylenverbindung, einer Stickstoffverbindung, einer organischen Phosphorverbindung, einer Oximverbindung und einer organischen Chlorverbindung, wobei die Komponente (H) in einer Menge von 0,1 bis 5 Massenteilen pro 100 Massenteile der Komponente (A) vorliegt.

8. Wärmeleitfähige Silikonzusammensetzung gemäß einem der Ansprüche 1 bis 7, wobei die Komponente (C) in einem Zustand von Teilchen mit einer durchschnittlichen Teilchengröße von 1 bis 200 µm in der Zusammensetzung dispergiert ist.

9. Gehärtetes Produkt der wärmeleitfähigen Silikonzusammensetzung gemäß einem der Ansprüche 1 bis 8.

## Revendications

1. Composition de silicone thermoconductrice comprenant :
(A) 100 parties en masse d'un organopolysiloxane ayant au moins deux groupes hydrocarbure aliphatique insaturé lié à un atome de silicium par molécule, et ayant une viscosité cinématique de 10 à 1 000 000 mm²/s à 25°C telle que mesurée par un viscosimètre d'Ostwald ;
(B) un organohydrogénopolysiloxane ayant au moins deux atomes d'hydrogène liés à un atome de silicium par molécule, le composant (B) étant dans une quantité telle que le nombre d'atomes d'hydrogène liés à un atome de silicium y étant est de 0,5 à 5,0 par 1 groupe alcényle dans le composant (A) ;
(C) 3 000 à 12 000 parties en masse d'au moins un élément choisi dans le groupe constitué de gallium et d'un alliage de gallium qui ont un point de fusion de -20 à 70°C ;
(D) 10 à 1 000 parties en masse d'une charge thermoconductrice ayant une taille moyenne des particules de 0,1 à 100 µm, la taille moyenne des particules étant un diamètre moyen en volume [MV] sur une base volumique tel que mesuré par un analyseur de taille de particules ;
(E) un catalyseur à métal du groupe du platine ;
(F) une poudre de palladium ayant une taille moyenne cumulative des particules en volume de 1 à 100 nm telle que mesurée par un analyseur de taille de particules ; et
(G-1) 0,1 à 500 parties en masse d'un organopolysiloxane représenté par la formule générale (1) suivante : 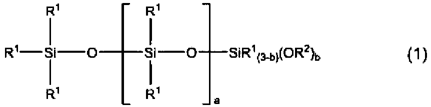 dans lequel R¹ représente indépendamment un groupe hydrocarbure monovalent substitué ou non, exempt de liaison insaturée aliphatique, ayant 1 à 10 atomes de carbone ; R² représente indépendamment un groupe alkyle, un groupe alcényle ou un groupe acyle ; a est un entier de 5 à 100 ; et b est un entier de 1 à 3.

2. Composition de silicone thermoconductrice selon la revendication 1, dans laquelle le composant (F) est dans une quantité de 0,00001 à 1,0 partie en masse pour 100 parties en masse du composant (A).

3. Composition de silicone thermoconductrice selon l'une quelconque des revendications 1 ou 2, dans laquelle le composant (F) est supporté sur un support autre que le palladium.

4. Composition de silicone thermoconductrice selon la revendication 3, dans laquelle le support est la silice.

5. Composition de silicone thermoconductrice selon l'une quelconque des revendications 1 à 4, comprenant en outre :
(G-2) un composé alkoxysilane qui est contenu en une quantité de 0,1 à 100 parties en masse pour 100 parties en masse du composant (A), et qui est représenté par la formule générale (2) suivante :
R³c R_{4d} Si (OR⁵) ₄-c-d (2)
dans lequel R³ représente indépendamment un groupe alkyle ayant 6 à 16 atomes de carbone ; R⁴ représente indépendamment un groupe hydrocarbure monovalent substitué ou non ayant 1 à 8 atomes de carbone ; R⁵ représente indépendamment un groupe alkyle ayant 1 à 6 atomes de carbone ; c est un entier de 1 à 3 ; d est un entier de 0 à 2 ; et une somme de c+d est un entier de 1 à 3.

6. Composition de silicone thermoconductrice selon l'une quelconque des revendications 1 à 5, comprenant en outre :
(G-3) un trifluoropropyltriméthoxysilane qui est contenu en une quantité de 0,1 à 100 parties en masse pour 100 parties en masse du composant (A).

7. Composition de silicone thermoconductrice selon l'une quelconque des revendications 1 à 6, comprenant en outre :
(H) au moins un agent de régulation de la réaction d'addition choisi dans le groupe constitué d'un composé acétylénique, d'un composé azoté, d'un composé organophosphoré, d'un composé oxime et d'un composé organochloré, le composant (H) étant dans une quantité de 0,1 à 5 parties en masse pour 100 parties en masse du composant (A).

8. Composition de silicone thermoconductrice selon l'une quelconque des revendications 1 à 7, dans laquelle le composant (C) est dispersé sous forme de particules ayant une taille moyenne des particules de 1 à 200 µm dans la composition.

9. Produit réticulé de la composition de silicone thermoconductrice selon l'une quelconque des revendications 1 à 8.
